# EUROPEAN PATENT APPLICATION

(11) **EP 4 102 192 A1**
(43) Date of publication of application: **14.12.2022**
(21) Application number: 20924016.7
(22) Date of filing: 15.12.2020
(51) Int. Cl.: G01F 1/684

(54) **PACKAGE-TYPE FLOW SENSOR**

(30) Priority: 10.03.2020 JP 2020040414
(71) Applicant: MMI Semiconductor Co., Ltd., Tokyo, 206-8567 (JP)
(72) Inventor: KASAI, Takashi, Kyoto-shi, Kyoto 600-8530 (JP); NAKAGAWA, Yusuke, Kyoto-shi, Kyoto 600-8530 (JP); YOSHIDA, Takuma, Kyoto-shi, Kyoto 600-8530 (JP); MORIHARA, Daisuke, Kyoto-shi, Kyoto 600-8530 (JP)
(74) Representative: Regimbeau
(86) International application number: PCT/JP2020/046686
(87) International publication number: WO 2021/181782

(57) **Abstract**

The packaged flow sensor is a packaged flow sensor for use by being fixed to an external substrate and includes a flow sensor chip including a sensor unit configured to detect a flow rate of a fluid, a case member including an opening toward the external substrate and configured to house the sensor unit in a state in which the sensor unit faces the opening, and a fixing member protruding from the case member toward the external substrate and configured to fix the packaged flow sensor to the external substrate.

## Description

### TECHNICAL FIELD

The present disclosure relates to packaged flow sensors.

### BACKGROUND ART

Flow sensors that detect the flow rate, the flow velocity, and the direction of the flow of a fluid are being used. A flow sensor includes, for example, a sensor unit which includes a heater and thermopiles with the heater interposed therebetween on a thin film (membrane). In the flow sensor including such a sensor unit, when a distribution of heat generated by heating the thin film by the heater is disturbed by the flow of the fluid, this disturbance is measured as a difference in the thermal electromotive forces generated in the thermopiles. Since the sensor unit uses the membrane, it can be said that the sensor unit is a component which is easily damaged by physical contact or the like.

For example, Patent Document 1 discloses a flow sensor that is formed integrally with a channel for passing a fluid. Patent Document 2 discloses a flow sensor that is formed separately from a channel and in which a sensor unit for detecting the flow velocity is exposed outside. The flow sensor disclosed in Patent Document 2 is arranged in the channel and detects the flow rate together with the sectional area of the channel.

### RELATED-ART DOCUMENTS

### PATENT DOCUMENTS

Patent Document 1: Japanese Patent No. 5652315
Patent Document 2: Japanese Patent No. 6435389

### SUMMARY OF THE INVENTION

### PROBLEM TO BE SOLVED BY THE INVENTION

Since the flow sensor disclosed in Patent Document 1 is formed integrally with the channel, it is difficult to reduce the size of the flow sensor, and the manufacturing cost is high. Since the flow sensor disclosed in Patent Document 2 is formed separately from the channel, the size of the flow sensor can be reduced easily. However, the flow sensor disclosed in Patent Document 2 is difficult to handle since the exposed sensor is easily damaged by physical contact or the like.

Therefore, a packaged flow sensor in which a sensor unit is protected by housing a flow sensor in a package can be considered. In the case of the packaged flow sensor, the flow sensor detects the flow of a fluid which is introduced through a vent hole provided in the package. However, depending on the position where the vent hole is provided, the flow of the fluid may not stabilize, and the performance of the flow sensor may deteriorate.

An object of one aspect of the disclosed technique is to provide a packaged flow sensor that can stabilize the flow of a fluid.

### MEANS TO SOLVE THE PROBLEM

One aspect of the disclosed technique is exemplified by a packaged flow sensor as follows. The packaged flow sensor is a packaged flow sensor for use by being fixed to an external substrate, including a flow sensor chip which includes a sensor unit configured to detect a flow rate of a fluid; a case member with an opening toward the external substrate and configured to house the sensor unit such that the sensor unit faces the opening; and a fixing member protruding from the case member toward the external substrate and fixing the packaged flow sensor to the external substrate.

Since delicate components for detecting the flow rate of a fluid are mounted on the surface of the sensor unit of the flow sensor, the sensor unit is susceptible to damage by physical contact or the like. In the disclosed technique, since the sensor unit of the flow sensor chip can be protected from physical contact or the like by housing the flow sensor chip in a package, the flow sensor can be handled easily. In addition, this packaged flow sensor is not formed integrally with a channel. Hence, this packaged flow sensor can be miniaturized more easily than a flow sensor which is formed integrally with a channel. Since the package itself is compact, the degree of freedom in attachment to a channel can be improved even when the packaged flow sensor is to be embedded to a separately formed channel to detect a flow rate from a detected flow velocity. Furthermore, the packaged flow sensor can remain compact even when it has a structure that includes a channel.

In this packaged flow sensor, the sensor unit is arranged to face the opening of the case member and is fixed to the external substrate by a fixing member in a state in which the opening faces the external substrate. Since the fixing member protrudes from the case member in the direction of the external substrate, a gap is formed between the case member and the external substrate. Fixing the packaged flow sensor to the external substrate in this manner allows the sensor unit to face the external sensor. Hence, the sensor unit can detect the flow of a fluid flowing in the gap formed between the case member and the external substrate. The gap formed between the case member and the external substrate can be used as a channel by the packaged flow sensor. Hence, the surface of the external substrate can be expected to have a flow adjustment effect that can stabilize the flow of the fluid. As a result, reduction in the sensitivity of the flow sensor chip may be restrained in the packaged flow sensor.

Furthermore, in the packaged flow sensor, since the sensor unit of the flow sensor chip faces the direction of the external substrate, the packaged flow sensor can be picked up easily when the packaged flow sensor is to be mounted on the external substrate by the tape and reel method. Hence, the productivity of the mounting process for mounting the packaged flow sensor onto the external substrate can be improved.

Note that an amount of protrusion by which the fixing member protrudes from the case member to the external substrate may be determined in accordance with the fluid velocity to be detected by the sensor unit. The channel that introduces the fluid into the sensor unit is formed by, for example, a gap which is formed between the external substrate and the case member by the fixing member. The height of the channel changes in accordance with the amount of protrusion of the fixing member. Forming a low channel restricts the introduction of the fluid into the sensor unit. That is, by decreasing the amount of protrusion, the packaged flow sensor can allow the sensor unit to detect the flow of a high velocity fluid while restricting the load placed on the sensor unit from the high velocity fluid. In addition, forming a high channel promotes the introduction of the fluid into the sensor unit. That is, by increasing the amount of protrusion, the packaged flow sensor can detect a low velocity fluid with high sensitivity.

In the packaged flow sensor, the fixing member may include a lead frame that is electrically coupled to an interconnect on the external substrate. Using the lead frame as a fixing member allows the packaged flow sensor to be fixed and electrically coupled to the external substrate at once.

In the packaged flow sensor, the case member includes a bottom plate formed in a rectangular shape and side walls which are erected from respective edges of the bottom plate toward the external substrate, and the fixing member may protrude from opposing ones of the side walls of the case member toward the external substrate. Providing the fixing member in this manner allows the fixing member to prevent the fluid from entering the gap, which is formed between the case member and the external substrate, from a direction different from the direction in which the gap extends. Hence, the flow of the fluid flowing through the channel can be further stabilized.

In the packaged flow sensor, the flow sensor chip may be arranged on the bottom plate in a state in which the sensor unit faces the opening. Arranging the flow sensor chip in this manner can reduce the height of the packaged flow sensor. That is, the miniaturization of the packaged flow sensor is facilitated.

The packaged flow sensor further includes a plate-shaped lid member that covers the opening. A first introduction hole and a second introduction hole that guide the fluid into the case member may be formed by the lid member and the opening, and the sensor unit may be arranged between the first introduction hole and the second introduction hole when viewed in a direction normal to the lid member. By providing the lid member, dust contained in the fluid can be prevented from adhering to the sensor portion. In addition, even when the opening is covered by the lid member, the fluid can be guided toward the sensor unit by providing the first introduction hole and the second introduction hole.

In the packaged flow sensor, the case member may further house a charge pump, which boosts a voltage supplied from the outside and supplies the boosted voltage to the sensor chip, or an amplifier which amplifies the output of the sensor chip. Having such a feature can suppress noise that can mix into the wiring between the sensor chip and the charge pump or the amplifier. Consequently, the performance of the packaged flow sensor can be improved.

### EFFECTS OF THE INVENTION

The packaged flow sensor can stabilize the flow of a fluid.

### BRIEF DESCRIPTION OF THE DRAWINGS

FIG. 1 is a first view illustrating an example of a sensor package according to an embodiment;
FIG. 2 is a second view illustrating the example of the sensor package according to the embodiment;
FIG. 3 is a third view illustrating the example of the sensor package according to the embodiment;
FIG. 4 is a fourth view illustrating the example of the sensor package according to the embodiment;
FIG. 5 is a plan view in which the sensor package according to the embodiment is seen from below without a lid;
FIG. 6 is a top-view diagram of a flow sensor chip;
FIG. 7 is a cross-sectional view taken along a line C-C of FIG. 6;
FIG. 8 is a first view schematically illustrating a flow velocity measurement method performed by the flow sensor chip;
FIG. 9 is a second view schematically illustrating the flow velocity measurement method performed by the flow sensor chip;
FIG. 10 is a first view exemplifying a state where the sensor package according to the embodiment is mounted on an external substrate;
FIG. 11 is a second view exemplifying a state where the sensor package according to the embodiment is mounted on the external substrate;
FIG. 12 is a view schematically illustrating a flow of air when the sensor package according to the embodiment is mounted on the external substrate;
FIG. 13 is a view illustrating an example of a sensor package according to a comparative example;
FIG. 14 is a flowchart illustrating an example of a method of manufacturing the sensor package according to the embodiment;
FIG. 15 is a first view exemplifying the state of the sensor package in the processes of the flowchart exemplified in FIG. 14;
FIG. 16 is a second view exemplifying the state of the sensor package in the processes of the flowchart exemplified in FIG. 14;
FIG. 17 is a third view exemplifying the state of the sensor package in the processes of the flowchart exemplified in FIG. 14;
FIG. 18 is a fourth view exemplifying the state of the sensor package in the processes of the flowchart exemplified in FIG. 14;
FIG. 19 is a fifth view exemplifying the state of the sensor package in the processes of the flowchart exemplified in FIG. 14;
FIG. 20 is a view exemplifying the state of a sensor package according to Modification 1;
FIG. 21 is a view exemplifying the state of a sensor package according to Modification 2; and
FIG. 22 is a view exemplifying the state of a sensor package according to Modification 3.

### MODE FOR CARRYING OUT THE INVENTION

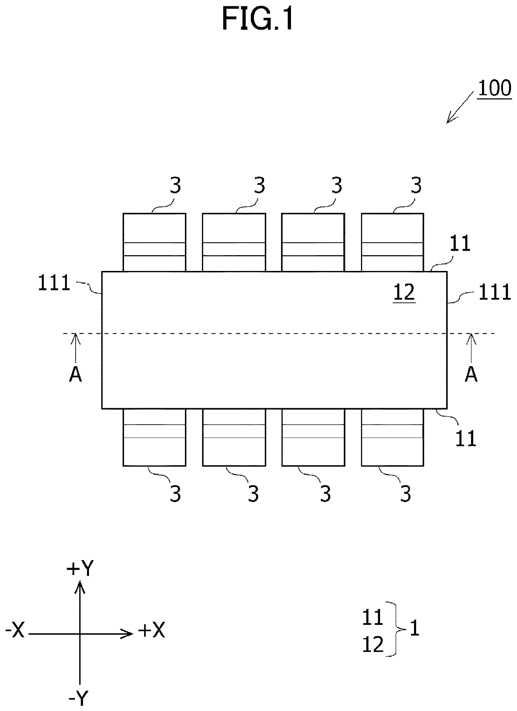

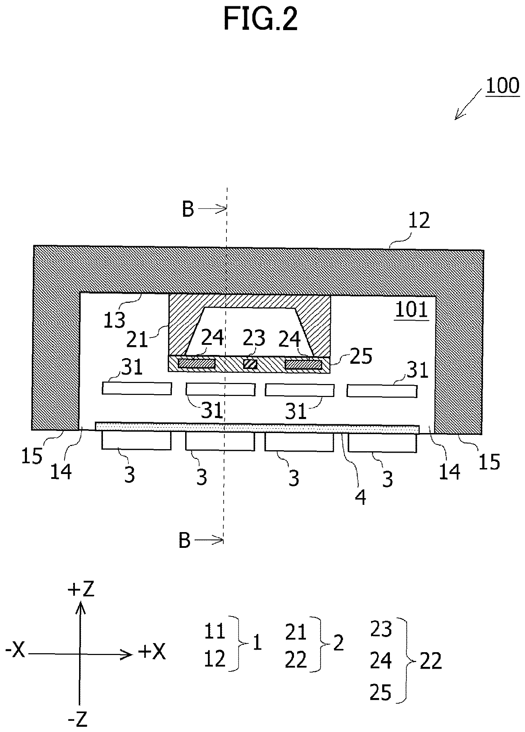

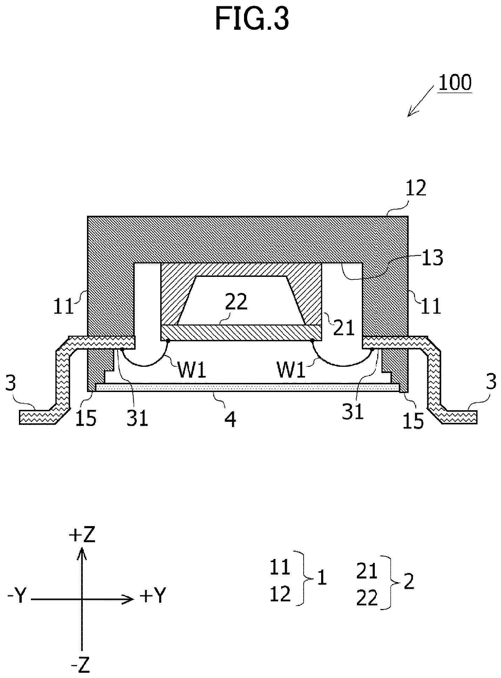

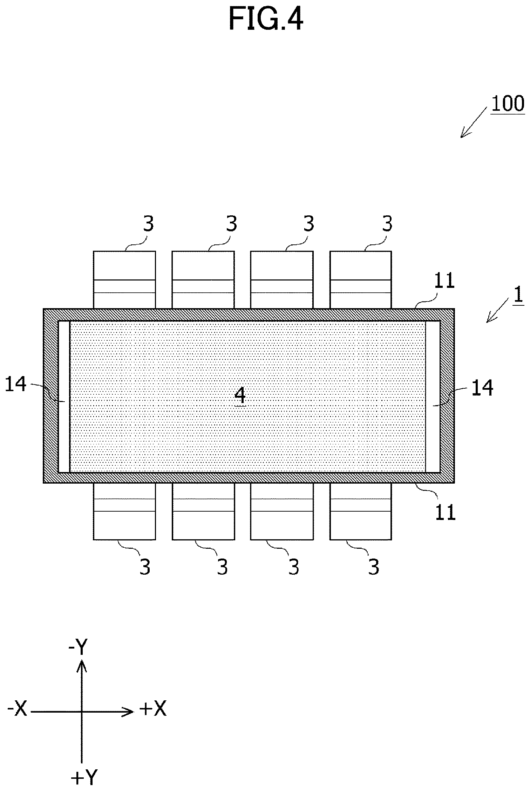

A sensor package according to an embodiment will be described with reference to the accompanying drawings. FIGs. 1 to 4 are views each illustrating an example of the sensor package according to the embodiment. FIG. 1 is a plan view in which a sensor package 100 is seen from the above. FIG. 2 is a cross-sectional view taken along a line A-A of FIG. 1. FIG. 3 is a cross-sectional view taken along a line B-B of FIG. 3. FIG. 4 is a plan view in which the sensor package 100 is seen from below. The sensor package 100 includes a resin base 1, a flow sensor chip 2, and lead frames 3. As can be understood with reference to FIG. 1, the sensor package 100 is formed in an approximately rectangular shape in a plan view from above. Hereinafter, in this specification, the side of the resin base 1 is referred to as an upper side, and the side of the lead frames 3 is referred to as a lower side. The long direction, the short direction, and the height direction of the sensor package 100 are referred to as an X direction, a Y direction, and a Z direction, respectively. The sensor package 100 is an example of a "packaged flow sensor".

The resin base 1 is a case member that opens downward to form a housing chamber 101 for housing the flow sensor chip 2. The resin base 1 illustrated in FIGS. 1 to 4 is formed in an approximately rectangular cuboid box shape. The resin base 1 includes a bottom plate 12 on a flat plate, side walls 11 and 11 erected downward from respective edges in the Y direction of the bottom plate 12, and side walls 111 and 111 erected downward from respective edges in the X direction of the bottom plate 12. The bottom plate 12 is formed into a rectangle (rectangle) that is longer in the X direction than in the Y direction when viewed in the Z direction. The length of each of the side walls 11 and 11 in the X direction is longer than length of each of the side walls 111 and 111 in the Y direction. The lead frames 3 are provided to protrude downward from each of the sidewalls 11 and 11 that oppose each other in the Y direction of the resin base 1 which is formed in a substantially rectangular cuboid. The plurality of lead frames 3 are arranged along the X direction in each of the side walls 11 and 11. On a top surface 13 which faces the housing chamber 101 of the bottom plate 12 of the resin base 1, the flow sensor chip 2 is placed such that a sensor unit 22 faces the opening of the resin base 1. The resin base 1 is an example of a "case member".

Each lead frame 3 is a connection terminal to an external substrate. As illustrated in FIGs. 2 and 3, the lead frames 3 protrude below the lower ends 15 of the resin base 1. The lower end of each lead frame 3 is bent in the Y direction. A part of each lead frame 3 protrudes into the housing chamber 101 to form an internal terminal 31. The lead frame 3 is an example of a "fixing member".

A lid 4 is a plate-shaped member that covers the opening of the resin base 1. The length in the short direction of the lid 4 is equal to the length in the short direction of the opening of the resin base 1. Further, the length in the long direction of the lid 4 is shorter than the length in the long direction of the opening of the resin base 1. The lid 4 is arranged such that its center approximately coincides with the center of the opening of the resin base 1 in a plan view. As a result, gaps are formed between the lid 4 and the opening at both ends in the long direction of the opening of the resin base 1. The gaps form vent holes 14 and 14 that allow a fluid to flow between the outside and the housing chamber 101. The vent holes 14 and 14 are examples of a "first introduction hole" and a "second introduction hole", respectively. The lid 4 is an example of a "lid member".

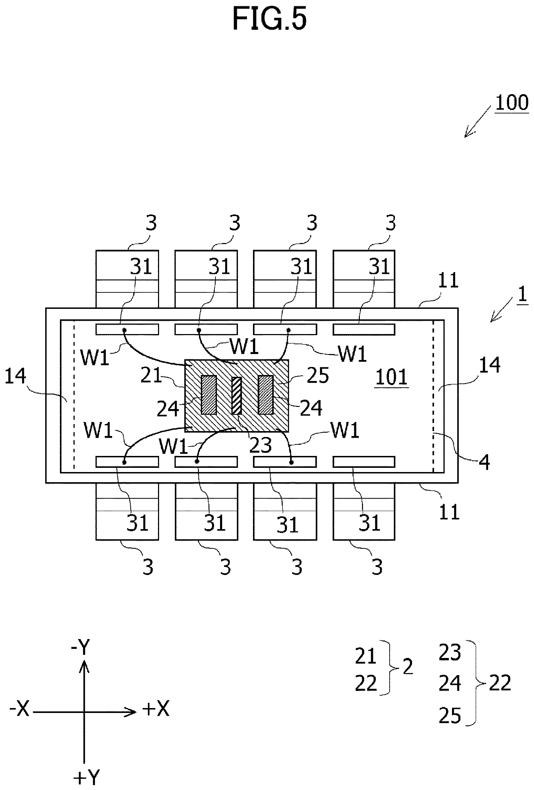

The flow sensor chip 2 is a sensor that measures the flow velocity of a fluid (for example, gas). The flow sensor chip 2 includes a body 21, which is shaped like a conical bowl and opens downward, and the sensor unit 22 which covers the opening of the body 21. FIG. 5 is a plan view in which the sensor package according to the embodiment is viewed from below without the lid. Note that in FIG. 5, in order to illustrate the positional relationship of the vent holes 14 and 14, the positions where the lid 4 and the vent holes 14 and 14 are provided are indicated by dotted lines. As can be understood with reference to FIG. 5, in a plan view from below, the flow sensor chip 2 is disposed between the vent holes 14 and 14. The flow sensor chip 2 is electrically coupled to the lead frames 3 by being coupled to the respective internal terminals 31 by metal wires W1. Details of the flow sensor chip 2 will be described later.

### (Flow Sensor Chip 2)

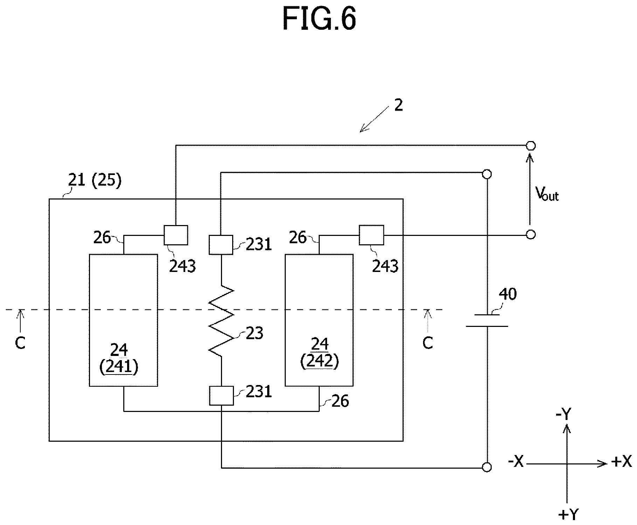

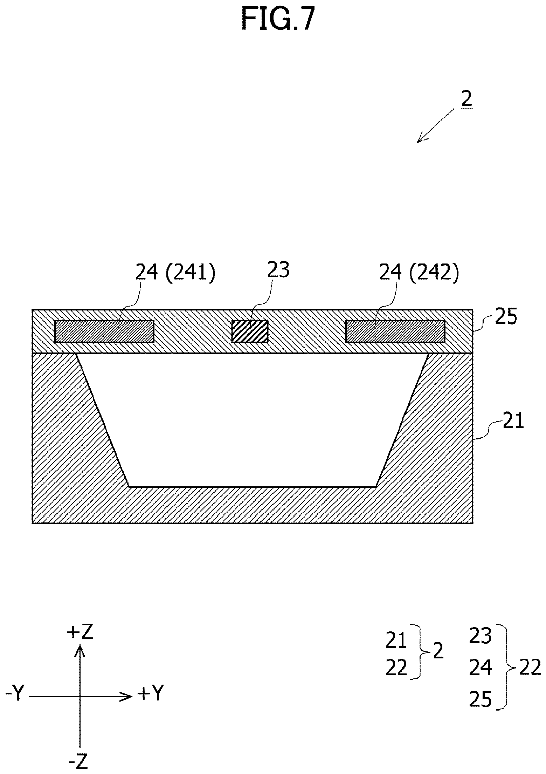

FIG. 6 is a top-view diagram of the flow sensor chip, and FIG. 7 is a cross-sectional view taken along a line C-C in FIG. 6. The flow sensor chip 2 includes the body 21 and a membrane 25. The body 21 has a hollow shape (conical bowl shape) with an opening on its upper surface and may be made of, for example, silicon. The membrane 25 is a thin film and has a hollow structure at the opening of the body 21 as illustrated in FIG. 7. The membrane 25 includes a heater 23 and thermopiles 24 and 24. The heater 23 and the thermopiles 24 and 24 are arranged in a line along the Y direction. A contact point at one end of each of the thermopiles 24 and 24 is disposed at a position which overlaps the body 21. When the thermopiles 24 and 24 are to be distinguished from each other, one of the thermopiles 24 and 24 will be referred to as a thermopile 241, and the other will be referred to as a thermopile 242.

The heater 23 is a heating device for heating the membrane 25. As it is a thin film, the membrane 25 has a low heat capacity and can be effectively heated by the heater 23. The thermopiles 24 and 24 are thermocouples that generate thermal electromotive force by receiving heat from the membrane 25. Since the contact point at one end of each of the thermopiles 24 and 24 is on the main body 21, the temperature difference between the membrane 25 and the main body 21 can be detected as thermal electromotive force. The thermopiles 24 and 24 generate higher thermal electromotive force as the temperature increases. When both of the thermopiles 24 and 24 have the same temperature, the thermopiles 24 and 24 generate identical thermal electromotive forces. The flow sensor chip 2 is, for example, a thermal flow sensor that heats the membrane 25 by the heater 23 and measures the flow rate based on a difference between the respective thermal electromotive forces of the thermopiles 24 and 24, which is generated by a difference in the distribution of heat in the membrane 25. The flow sensor chip 2 is manufactured by, for example, Micro Electro Mechanical Systems (MEMS).

Power supply terminals 231 and 231 for receiving power supplied to the heater 23 from an external power supply 40 are connected to the respective ends of the heater 23 in the membrane 25 of the flow sensor chip 2. Measuring terminals 243 and 243 for measuring a difference Vₒᵤₜ between the respective thermal electromotive forces generated by the thermopiles 24 and 24 are provided in the membrane 25. Each of the thermopiles 24 and 24 is connected in series to the corresponding one of the measuring terminals 243 by an interconnect 26. The flow sensor chip 2 is, for example, a surface-mount flow sensor in which the membrane 25 including the heater 23 and the thermopiles 24 and 24 is exposed to the outside. The sensor unit 22 that includes the membrane 25, the heater 23, and the thermopiles 24 and 24 is an example of a "sensor unit". The flow sensor chip 2 is an example of a "flow sensor chip". Although thermopiles are used as temperature detecting elements for detecting the heat of the heater 23 here, the temperature detecting elements may be sensor chips such as diodes, thermistors, or platinum resistance thermometers or the like.

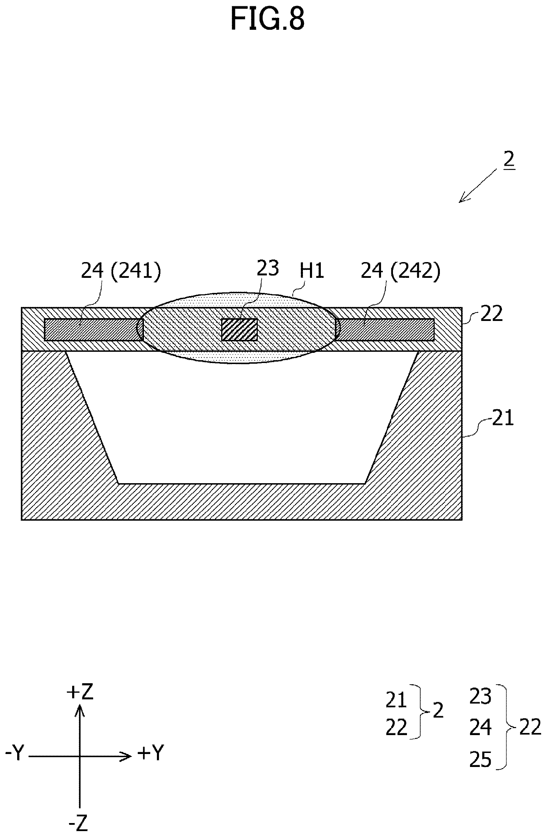

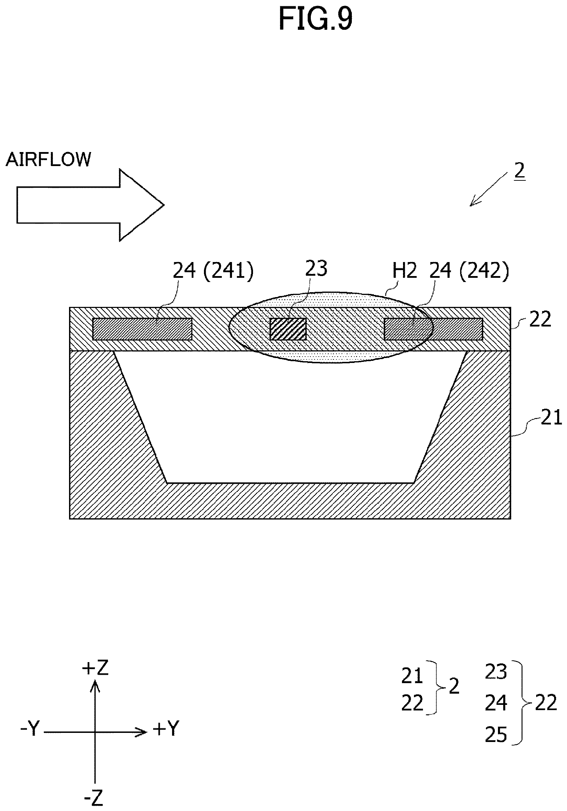

FIGs. 8 and 9 are views schematically illustrating a flow velocity measurement method performed by the flow sensor chip. FIG. 8 exemplifies a state in which there is no airflow in the periphery of the flow sensor chip 2. When there is no airflow in the periphery the flow sensor chip 2, the temperature decreases as the distance from the position of the heater 23 increases, resulting in a uniform distribution of heat with the heater 23 as the center in the membrane 25 as exemplified by a heat distribution H1. Hence, both of the thermopiles 24 and 24 are heated to the same temperature by the heater 23, thus generating identical thermal electromotive forces in the thermopiles 24 and 24.

FIG. 9 is a exemplifies a state in which air is flowing in the periphery of the flow sensor chip 2. Letting one of the thermopiles 24 and 24 be the thermopile 241 and the other be the thermopile 242, a state in which air is flowing from the thermopile 241 in the direction of the thermopile 242 is exemplified in FIG. 9. Since an area on the upstream side of the airflow is cooled by the airflow, the temperature decreases in this area. Thus, as illustrated by the heat distribution H2, the heat distribution in the membrane 25 is shifted to the downstream side from the upstream side (the downstream side has a higher temperature than the upstream side) of the heater 23. Therefore, the thermopile 242 located on the downstream side of the heater 23 has a higher temperature than the thermopile 241 located on the upstream side of the heater 23. As a result, a difference is generated between a thermal electromotive force V₁ of the thermopile 241 and a thermal electromotive force V₂ of the thermopile 242.

As described above, the thermal electromotive forces generated by the thermopiles 24 and 24 increase as the temperature increases. The temperature of the thermopile 24 which is located on the downstream side of the airflow becomes higher than the temperature of the thermopiles 24 located on the upstream side of the airflow. Hence, by measuring the difference (that is, V₂ - V₁) between the thermal electromotive force V₁ of the thermopile 241 and the thermal electromotive force V₂ of the thermopile 242, the flow sensor chip 2 can detect the direction of the airflow and the strength of the airflow.

Since the thermopile 242 has a higher temperature than the thermopile 241 when V₂ - V₁ is positive, the flow sensor chip 2 can detect that the air is flowing from the thermopile 241 in the direction toward the thermopile 242. Also, since the thermopile 241 has a higher temperature than the thermopile 242 when V₂ - V₁ is negative, the flow sensor chip 2 can detect that the air is flowing from the thermopile 242 in the direction toward the thermopile 241. Furthermore, since both of the thermopiles 24 and 24 have the same temperature when V₂ - V₁ is 0 (zero), the flow sensor chip 2 can detect that there is no airflow (or the airflow is below the lower limit of a detection range) in such a state. The flow sensor chip 2 can detect that the air is flowing stronger as the value of V₂ - V₁ increases. The flow sensor chip 2 is an example of a "sensor chip".

As can be understood with reference to FIG. 5, the flow sensor chip 2 is housed in the resin base 1 so as to be positioned between the vent holes 14 and 14 in the direction normal to the lid 4. As a result, the vent hole 14, the thermopile 241, the thermopile 242, and the vent hole 14 are arranged in a single line in this order along the X direction.

### (Example of Implementation)

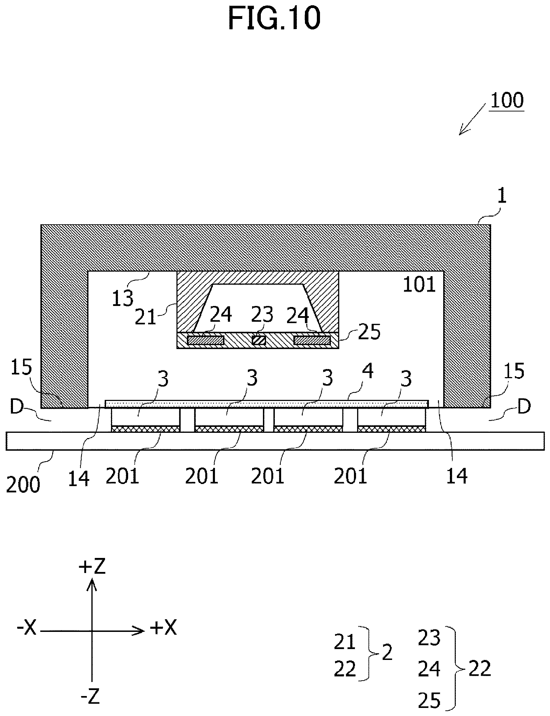

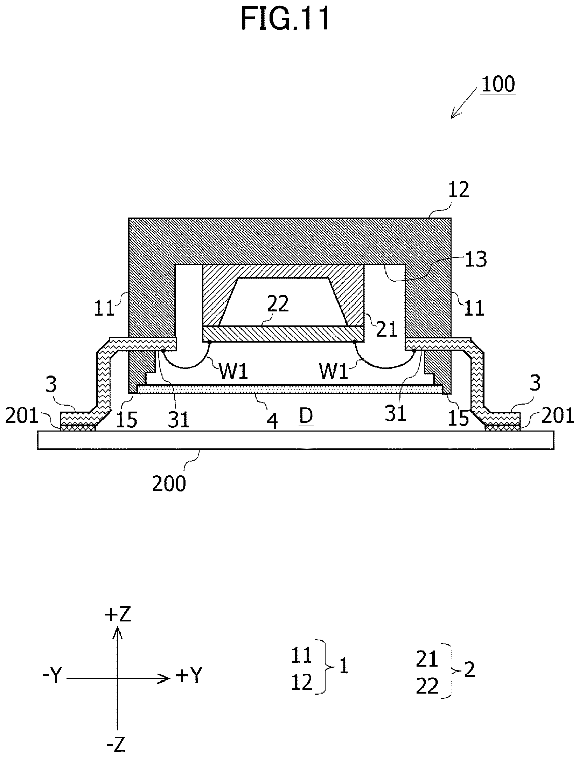

FIGs. 10 and 11 are views each illustrating a state in which the sensor package according to the embodiment is mounted on an external substrate. FIG. 10 is a view in which the sensor package 100 is mounted on an external substrate 200 as viewed from the Y direction. FIG. 10 illustrates a state in which the side wall 11 on the front side of the drawing has been removed so that the housing chamber 101 can be visually recognized. FIG. 11 is a view in which the sensor package 100 is mounted on the external substrate 200 as viewed from the X direction. In a similar manner to FIG. 10, FIG. 11 also illustrates a state in which the side wall 111 on the front side of the drawing has been removed so that the housing chamber 101 can be visually recognized. The external substrate 200 is, for example, a printed circuit board. The sensor package 100 is mounted on the external substrate 200, for example, by fixing the lead frames 3 and the interconnects on the external substrate 200 by solder 201.

The lead frames 3 protrude below the lower ends 15 of the resin base 1. That is, the lead frames 3 protrude from the lower ends 15 of the resin base 1 toward the external substrate 200. Hence, a gap D is formed between the lower ends 15 of the resin base 1 and the external substrate 200. As can be understood with reference to FIG. 11, the end in the +Y direction and the end in the -Y direction of the gap D are interposed between the lead frames 3 which are arrayed in a single line. In addition, as can be understood with reference to FIGs. 10 and 11, the direction in which the gap D extends and the direction in which the plurality of lead frames 3 are arranged are both the X direction and coincide with each other. The gap D interposed between the lead frames 3 can be used as a channel through which a fluid may pass in the X direction.

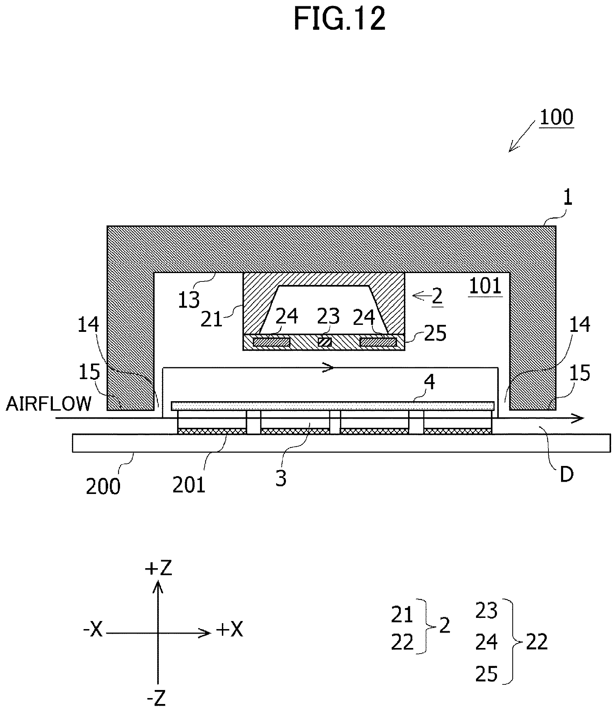

FIG. 12 is a view schematically illustrating the airflow when the sensor package according to the embodiment is mounted on the external substrate. A portion of the air flowing through the gap D between each lower end 15 of the sensor package 100 and the external substrate 200 is introduced into the housing chamber 101 through one vent hole 14, and the flow sensor chip 2 can detect the airflow discharged from the housing chamber 101 through the other vent hole 14. That is, the sensor package 100 can detect the air flowing through the channel formed by the gap D interposed between the lead frames 3, the vent holes 14 and 14, and the housing chamber 101. Although the direction of the airflow is indicated in only a single direction by an arrow in the FIG. 12 for the sake of descriptive convenience, the flow of the fluid can be detected in both directions. As described above, the flow sensor chip 2 can distinguish and detect the direction of the airflow depending on whether the potential of difference between the respective electromotive forces of the thermopiles 24 and 24 is positive or negative.

### (Comparative Example)

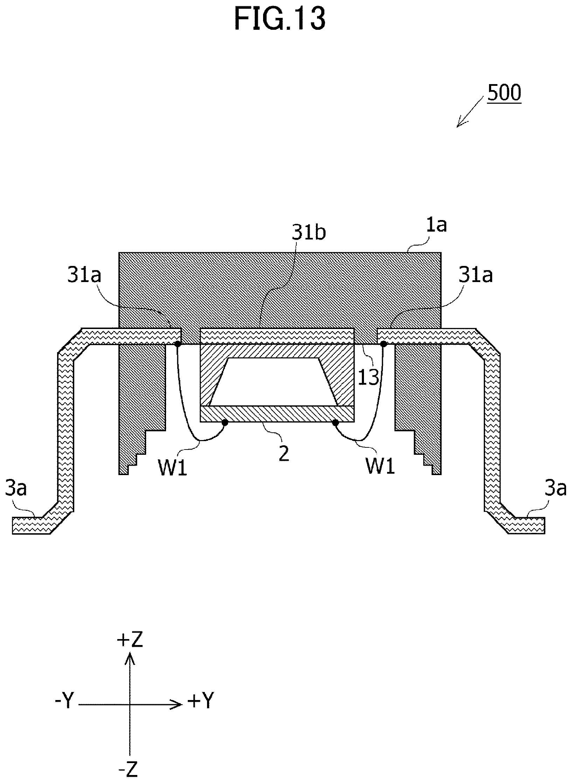

A comparative example will be described. In the comparative example, the flow sensor chip 2 is provided on the lead frames 3 instead of the resin base 1. FIG. 13 is a view illustrating an example of a sensor package according to the comparative example. In a sensor package 500 exemplified in FIG. 13, the flow sensor chip 2 is placed on a horizonal portion 31b of the lead frame 3. When the sensor package 500 is formed in this manner, resin is further provided on the upper side of the horizontal portion 31b. Hence, it becomes difficult to form the sensor package 500 which is low in height. On the other hand, in the sensor package 100 according to the embodiment, the flow sensor chip 2 is provided on the top surface 13 of the resin base 1 such that each lead frame 3 protrudes from the side walls 11 of the resin base 1. Hence, it becomes easy to form the sensor package 100 which is low in height.

### (Method of Manufacturing Sensor Package 100)

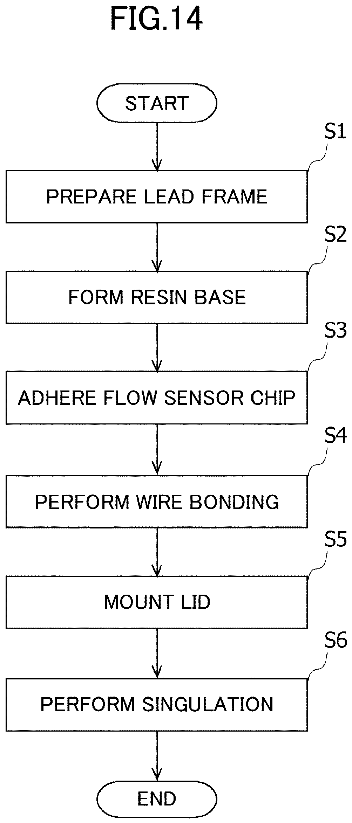

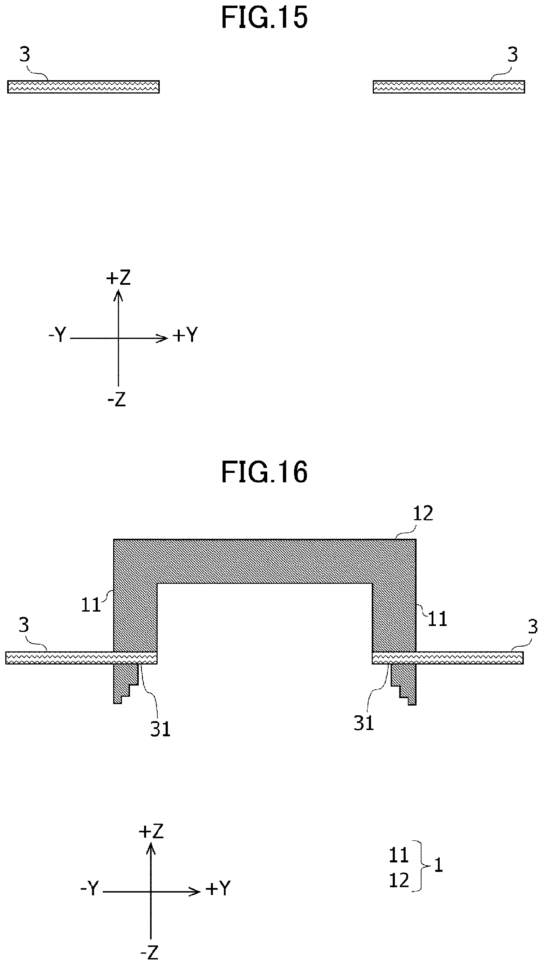

FIG. 14 is a flowchart illustrating a method of manufacturing the sensor package according to the embodiment. FIGs. 15 to 19 are views exemplifying the state of the sensor package in the respective processes of the flowchart illustrated in FIG. 14. Note that the sensor package 100 is manufactured in a state in which the respective resin bases 1 used in the plurality of sensor packages 100 are connected to each other, and the sensor packages 100 are separated from each other by being singulated in the process of S6 of FIG. 14. However, for the sake of simplicity, only one sensor package 100 is illustrated in FIGs. 15 to 19. An example of the method of manufacturing the sensor packages 100 will be described hereinafter with reference to FIGs. 14 to 19.

In S1, the lead frames 3 are prepared. FIG. 15 is a view illustrating an example of the lead frame prepared in S1 of the method of manufacturing the sensor package according to the embodiment. In S2 of FIG. 14, the resin base 1 is formed on each of the prepared lead frames 3. FIG. 16 is a view illustrating a state in which the resin base is formed in S2 of the method of manufacturing the sensor package according to the embodiment. The internal terminals 31 are also formed when each resin base 1 is formed in S2.

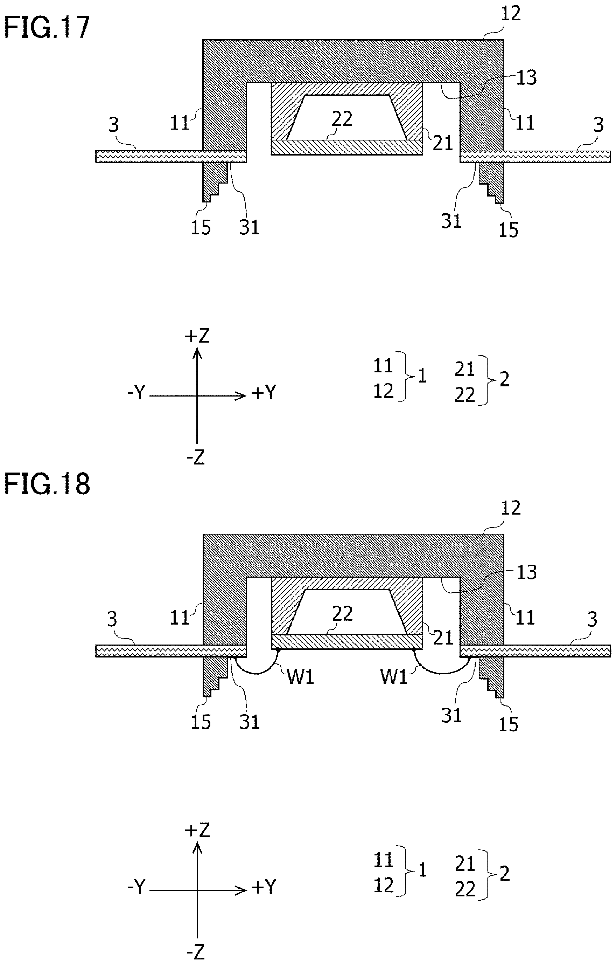

In S3 of FIG. 14, the flow sensor chip 2 is adhered to the top surface 13 of each resin base 1. FIG. 17 is a view illustrating a state in which the flow sensor chip 2 is adhered in S3 of the method of manufacturing the sensor package according to the embodiment. As illustrated in FIG. 17, the flow sensor chip 2 is adhered to the top surface 13 of each resin base 1 in a state in which the sensor unit 22 faces the opening of the resin base 1.

In S4 of FIG. 14, each flow sensor chip 2 and the internal terminals 31 are coupled by wire bonding. FIG. 18 is a view illustrating a state in which wire bonding is performed in S3 of the method of manufacturing the sensor package according to the embodiment. As illustrated in FIG. 18, the flow sensor chip 2 and the internal terminals 31 are coupled by wire bonding using the metal wires W1 by the process of S3.

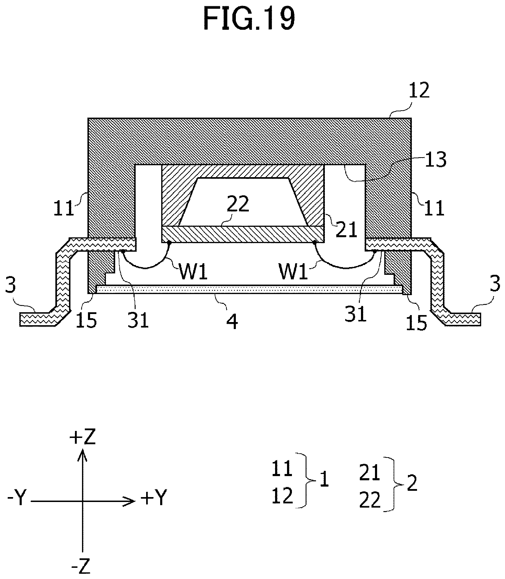

In S5 of FIG. 14, each lid is mounted. FIG. 19 is a view illustrating a state in which the lid is mounted in S3 of the method of manufacturing the sensor package according to the embodiment. As illustrated in FIG. 19, the lid 4 is provided to cover the opening of the resin base 1. Subsequently, in the process of S6 of FIG. 14, each of the sensor packages 100 is separated by singulation, and each lead frame 3 is bent into a desired shape.

As a reference, in the sensor package 500 according to the comparative example described above, the resin base 1a is formed after the flow sensor chip 2 is adhered to the lead frame 3 which is prepared in S1 of FIG. 14. Hence, the manufacturing process differs from that of the sensor package 100 according to the embodiment.

### <Effects of Embodiment>

In the sensor package 100 according to the embodiment, the flow sensor chip 2 is provided in the resin base 1 in a state in which the sensor unit 22 faces the external substrate 200. Since the lead frames 3 protrude from the lower ends 15 of the resin base 1 toward the external substrate 200, the gap D can be formed between the external substrate 200 and the lower ends 15 of the resin base 1. As described above, since a part of the air that flows through the gap D can be introduced to the housing chamber 101 via the vent holes 14, the sensor package 100 can detect the airflow. In addition, in the embodiment, by using the gap D as a channel, it is possible to expect the surface of the external substrate 200 to have a flow adjustment effect that can stabilize the flow of the fluid. Although the height of the gap D can change the rate of air that flows through the gap D and the housing chamber 101, the height of the gap D can be changed based on the shape (the bend height and the amount of protrusion from the resin base 1 toward the external substrate 200). Hence, the flow velocity sensitivity of the sensor package 100 can be changed based on the shape of the lead frames 3, thus allowing a desired sensitivity to be obtained.

For example, decreasing the amount by which the lead frames 3 protrude from the resin base 1 toward the external substrate 200 can lower the height of the gap D. Lowering the height of the gap D restricts the introduction of fluid into the flow sensor chip 2. That is, decreasing the amount of the protrusion of the lead frames 3 allows the sensor package 100 to detect the flow of a fluid while restricting the load from a fluid of a high velocity on the flow sensor chip 2. In addition, for example, increasing the amount by which the lead frames 3 protrude from the resin base 1 toward the external substrate 200 can raise the height of the gap D. Raising the height of the gap D promotes the introduction of fluid into the flow sensor chip 2. That is, increasing the amount of the protrusion of the lead frames 3 allows the sensor package 100 to detect the flow of the fluid with a high sensitivity even when the flow velocity of the fluid is low. Note that although the lead frames 3 are bent and protrude toward the external substrate 200 in the embodiment, the lead frames 3 may extend straight from the lower ends of the resin base 1 toward the external substrate 200.

The lid 4 covers the opening of the resin base 1 in the sensor package 100 according to the embodiment. Hence, in this embodiment, the sensor package 100 is protected by the resin base 1 and the lid 4 from physical impact and surrounding dust.

In the sensor package 100 according to the embodiment, the direction in which the gap D extends coincides with the direction in which the plurality of lead frames 3 are arrayed. Hence, the plurality of lead frames 3 can attenuate the air flowing toward the gap D from a different direction (for example, the Y direction) from the direction in which the gap D extends. Therefore, the sensor package 100 can suppress turbulence in the air flowing through the gap D, thus preventing a reduction in the fluid detection accuracy of the flow sensor chip 2.

### <Modification 1>

In the embodiment, each portion bent in the Y direction at the lower end of each lead frame 3 is fixed to the corresponding interconnect on the external substrate 200 by the solder 201. Modification 1 will describe an arrangement in which the lower end of each lead frame 3 is inserted into a corresponding through hole provided in the external substrate 200.

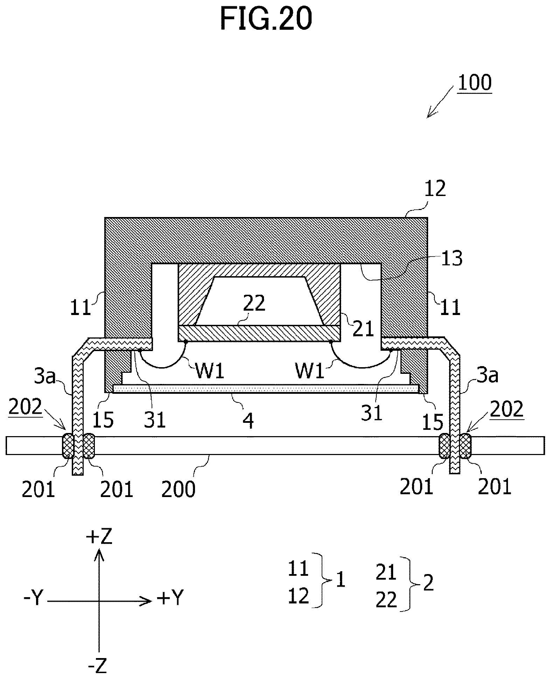

FIG. 20 is a view illustrating an example of the sensor package according to modification 1. FIG. 20 also illustrates the external substrate 200 on which the sensor package 100a according to the first modified example is mounted. The sensor package 100a differs from the sensor package 100 according to the embodiment in that the lower end of each lead frame 3a is not bent (extend straight in the Z direction). The external substrate 200 includes through holes 202 that penetrate the external substrate 200 in the thickness direction. The sensor package 100a is fixed by the solder 201 in a state where the lower end of each lead frame 3a is inserted into the corresponding through-hole 202 in the external substrate 200. According to modification 1, inserting the lead frames 3a into the through holes 202 allows the sensor package 100a to be fixed to the external substrate 200 more firmly.

### <Modification 2>

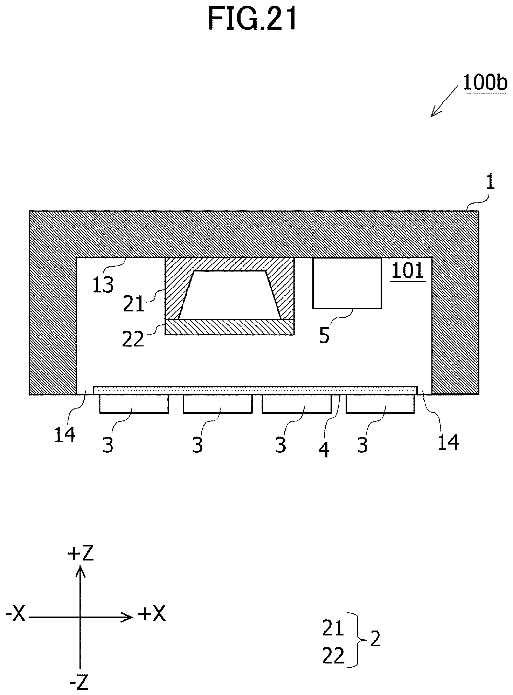

In the housing chamber 101 formed by the resin base 1 of the sensor package, another electronic component may be further mounted in addition to the flow sensor chip 2. FIG. 21 is a view illustrating an example of a sensor package according to modification 2. FIG. 21 is a cross-sectional view of a sensor package 100b taken at a position corresponding to a line A-A of FIG. 1. In the sensor package 100b according to modification 3, an electronic component 5 is also mounted on the top surface 13 of the resin base 1 in addition to the flow sensor chip 2. The electronic component 5 may be any electronic component. The electronic component 5 may be, for example, a charge pump that boosts a voltage supplied from the outside and supplies the boosted voltage to the flow sensor chip 2, or may be an amplifier that amplifies an output from the flow sensor chip 2. The flow sensor chip 2 and the electronic component 5 may be coupled by a metal wire or may be coupled to an interconnect on the top surface 13. Noise which mixes into the wiring between the flow sensor chip 2 and the electronic component 5 is suppressed by mounting the electronic component 5 on the top surface 13 in the housing chamber 101. As a result, the performance of the sensor package 100b can be improved.

### <Modification 3>

In the embodiment, airflow is introduced into the housing chamber 101 through the vent holes 14 and 14 provided in the lower opening of the resin base 1. Modification 3 will describe an arrangement in which through holes are also provided in the side walls 11 and 11 of the resin base 1.

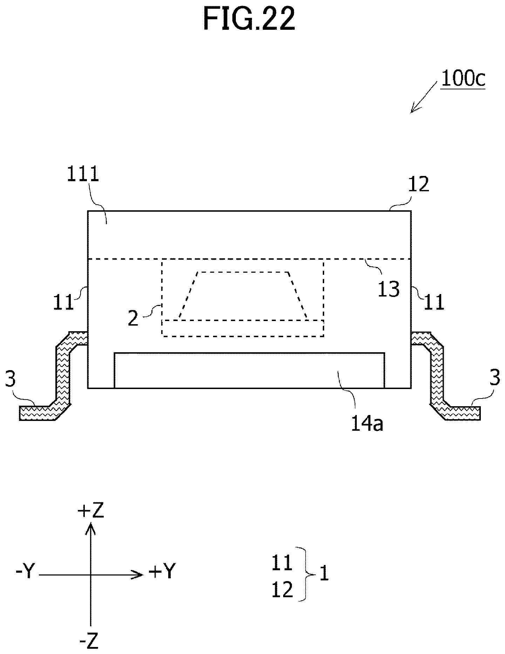

FIG. 22 is a view illustrating an example of a sensor package according to modification 3. FIG. 22 is a view in which a sensor package 100c according to modification 3 is viewed from the side of the side wall 111 (from the +X direction). As can be understood with reference to FIG. 22, a vent hole 14a is provided, at a position below the flow sensor chip 2, in the side wall 111 of the resin base 1. According to modification 3, since the vent hole 14a allows more airflow to be introduced into the housing chamber 101, the sensitivity of the flow sensor chip 2 can be further improved.

### (Other Modifications)

For example, the lid 4 may be omitted in the sensor package 100. Even when the lid 4 is omitted, turbulence in the airflow introduced into the flow sensor chip 2 may be suppressed by using the gap D, which is formed between the lower ends 15 of the resin base 1 and the external substrate 200, as a channel.

In the sensor package 100, the sensor package 100 is fixed to the external substrate 200 by the lead frames 3, which are electrically coupled to the external substrate 200. However, the sensor package 100 may be fixed to the external substrate 200 by a fixing member that is not electrically coupled.

The embodiment and the modifications disclosed above can be combined.

### [Description of Symbols]

100, 100a, 100b, 100c, 500 sensor package
1, 1a resin base
101 housing chamber
11, 111 side wall
12 bottom plate
13 top surface
13 vent hole
14, 14a vent hole
15 lower end
2 flow sensor chip
200 external substrate
202 through hole
21 body
22 sensor unit
23 heater
231 power supply terminal
24, 241, 242 thermopile
243 measuring terminal
25 membrane
26 interconnect

## Claims

1. A packaged flow sensor for use by being fixed to an external substrate, the packaged flow sensor comprising:
a flow sensor chip including a sensor unit configured to detect a flow rate of a fluid;
a case member including an opening toward the external substrate and configured to house the sensor unit in a state in which the sensor unit faces the opening; and
a fixing member protruding from the case member toward the external substrate and configured to fix the packaged flow sensor to the external substrate.

2. The packaged flow sensor according to claim 1, wherein an amount by which the fixing member protrudes from the case member toward the external substrate is determined in accordance with a flow velocity to be detected by the sensor unit, and
wherein a gap formed between the external substrate and the case member by the fixing member forms a channel through which a fluid is introduced into the sensor unit.

3. The packaged flow sensor according to claim 1 or 2, wherein the fixing member includes a lead frame electrically coupled to an interconnect on the external substrate.

4. The packaged flow sensor according to any one of claims 1 to 3, wherein the case member includes a bottom plate formed in a rectangular shape and side walls erected from respective edges of the bottom plate toward the external substrate, and
wherein the fixing member protrudes from opposing ones of the side walls of the case member toward the external substrate.

5. The packaged flow sensor according to claim 4, wherein the flow sensor chip is provided on the bottom plate in a state in which the sensor unit faces the opening.

6. The packaged flow sensor according to any one of claims 1 to 5, further comprising a plate-shaped lid member configured to cover the opening,
wherein the lid member and the opening form a first introduction hole and a second introduction hole each configured to introduce the fluid into the case member, and
wherein the sensor unit is arranged between the first introduction hole and the second introduction hole when viewed in a direction normal to the lid member.

7. The packaged flow sensor according to any one of claims 1 to 6, wherein the case member further houses a charge pump configured to boost a voltage supplied from outside and to supply the boosted voltage to the flow sensor chip.

8. The packaged flow sensor according to any one of claims 1 to 7, wherein the case member further houses an amplifier configured to amplify an output from the flow sensor chip.
